**Europäisches Patentamt**

**European Patent Office**

**Office européen des brevets**

(19)

(11) Veröffentlichungsnummer: **0 015 309**
**B1**

# (12) EUROPÄISCHE PATENTSCHRIFT

(45) Veröffentlichungstag der Patentschrift:
**17.11.82**

(21) Anmeldenummer: **79104294.8**

(22) Anmeldetag: **03.11.79**

(51) Int. Cl.³: **G 02 B 5/14**

(54) **Vorrichtung zum Andrücken eines Lichtwellenleiters an ein photoelektrisches Bauelement.**

(30) Priorität: **28.02.79 DE 2907705**

(43) Veröffentlichungstag der Anmeldung:
**17.09.80 Patentblatt 80/19**

(45) Bekanntmachung des Hinweises auf die Patenterteilung:
**17.11.82 Patentblatt 82/46**

(84) Benannte Vertragsstaaten:
**AT FR GB IT**

(56) Entgegenhaltungen:
**DE-A-2 630 340**
**FR-A-2 102 647**
**US-A-3 579 177**
**US-A-3 704 996**
**US-A-3 937 548**

(73) Patentinhaber: **Schaltbau Gesellschaft mbH,**
**Hohenwaldeckstrasse 1, D-8000 München 90 (DE)**

(72) Erfinder: **Keller, Gerhard, Alpspitzstrasse 2,**
**D-8011 Vaterstetten (DE)**

(74) Vertreter: **Schneider, Wilhelm,**
**Kabelkamp 20 Postfach 260, D-3000 Hannover 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Vorrichtung zum Andrücken eines Lichtwellenleiters an ein photoelektrisches Bauelement

Die vorliegende Erfindung bezieht sich auf eine Verbindung zwischen einem Lichtwellenleiter und der lichtaufnehmenden oder -abgebenden Fläche eines photoelektrischen Bauelements.

Neben der Verwendung zur Nachrichtenübertragung über größere Entfernungen finden Lichtwellenleiter in immer größerem Umfang Eingang in die potentialfreie Signal- und Datenübertragung auf kurze Entfernungen, wie z. B. in Fahrzeugen, Flugzeugen, Lokomotiven, Werkzeugmaschinen und hochwertigen Konsumgeräten. In dieser Anwendungsform stellen sie meistens die Verbindungen zwischen gedruckten Schaltungen her, die lichtaufnehmende oder -abgebende photoelektrische Bauelemente umfassen. In Anlehnung an die bei der Nachrichtenübertragung übliche Technik werden dabei die Lichtwellenleiter mit den Bauelementen fest verbunden, wie dies z. B. aus der Zeitschrift »Elektronische Entwicklung« 11/1978, Seite 44, bekannt ist. Diese Verbindungstechnik hat jedoch den Nachteil, daß eine Veränderung oder Auswechslung von Bauelementen oder Lichtwellenleiter sehr aufwendig ist und gegebenenfalls zu einer großen Lagerhaltung zwingt. Die Verwendung von an sich bekannten Steckverbindungen, wie sie in der genannten Zeitschrift auf den Seiten 46 ff dargestellt sind, würde es erforderlich machen, die verhältnismäßig großen Buchsenteile solcher Steckverbinder in die gedruckte Schaltung zu integrieren. Dadurch würden die gedruckten Schaltungen unhandlich. Wenn dann noch eine Mehrzahl von Lichtwellenleitern, gegebenenfalls an verschiedenen Stellen der Schaltung angelegt werden müssen, wird eine Mehrzahl von Buchsenteilen erforderlich, und damit steigt die Schwierigkeit, diese auf der gedruckten Schaltung unterzubringen.

Der vorliegenden Erfindung liegt die Aufgabe zugrunde, eine Vorrichtung zum Anlegen von Lichtleitern an ein photoelektrisches Bauelement anzugeben, die in ihrer Konstruktion und Handhabung einfach und damit preiswert herzustellen ist und die weiterhin leicht lösbar und herstellbar ist. Außerdem soll sie so klein dimensionierbar sein, daß ohne Schwierigkeit und übermäßig hohen räumlichen Aufwand eine Mehrzahl von ihnen auf gedruckten Schaltungen angebracht werden kann.

Gegenstand der Anmeldung ist eine Vorrichtung zum Andrücken der Stirnfläche eines Lichtwellenleiters mit oder ohne eine das Endstück des Lichtwellenleiters schützende Hülse an die lichtaufnehmende oder -abgebende Fläche eines photoelektrischen Bauelements. Nach der Erfindung umfaßt die Vorrichtung einen Körper mit einer Bohrung, die an ihrem einen Ende das Bauelement und im übrigen den Lichtwellenleiter aufnimmt, wobei sie mindestens in der Nähe des Bauelements den Gesamtquerschnitt des Lichtwellenleiters schlüssig umhüllt, und eine mit dem Körper verbundene Blattfeder, deren freies Ende mit Abstand vor der den Bauelementen abgewandten Öffnung der Bohrung angeordnet und in Richtung weg vom Bauelement auslenkbar ist und das mit einer Perforation versehen ist, deren Querschnitt in der Projektion auf die Öffnung der Bohrung im ausgelenkten Zustand deren Querschnitt entspricht, sich jedoch in der Entspannungsbewegung gegenüber diesem verengt.

Der besondere Vorteil der erfindungsgemäßen Vorrichtung ist darin zu sehen, daß sie aus wenigen Bauelementen besteht, die einfach herzustellen und zu handhaben sind. Im ausgelenkten Zustand erlaubt es die Perforation in der Feder den gegebenenfalls mit einer Hülse umgebenen Lichtwellenleiter durch diese Perforation frei hindurchzuführen und in die Bohrung einzuführen. In der Bohrung stößt der Lichtwellenleiter unmittelbar auf das photoelektrische Bauelement. Beim Entspannen der Feder bewegt sich diese in Richtung auf das Bauelement. Dabei erfaßt die Perforation den Lichtwellenleiter an Teilen seines Umfanges und drückt ihn auf das Bauelement. Durch diese äußerst einfache Konstruktion und Handhabung ist die erfindungsgemäße Vorrichtung einfach und preiswert herzustellen und leicht zu handhaben.

In einer bevorzugten Ausführungsform ist der Körper mit einer die Bohrung in einem Abstand von dem Bauelement durchsetzenden Ausnehmung versehen, in die das freie Ende der Blattfeder hineinragt. Dabei ist die Blattfeder im entspannten Zustand im wesentlichen V-förmig, und sie liegt mit ihrem einen Schenkel an der dem Bauelement abgewandten Ausnehmungswand an. Dieser Schenkel ist so gestaltet, daß er den Querschnitt der Bohrung freiläßt. Der Vorteil dieser Ausnehmungsform ist darin zu sehen, daß eine bessere Führung des Lichtwellenleiters gegeben ist. Weiterhin bietet sie einen gewissen Schutz für die Feder und den unter der Feder liegenden Teil der Bohrung. In Weiterbildung dieser Ausführungsform kann sie mit von der V-Form abweichenden Abschnitten versehen sein, die in Kehlen in der Ausnehmungswand eingreifen. Dies erleichtert Einbau und Auswechslung der Feder ohne besondere Maßnahmen an dem Körper als solchem.

Um die Einwirkung von Streulicht auf die Berührungsstelle zwischen dem Lichtwellenleiter und dem Bauelement zu vermeiden, ist es von Vorteil, den Körper aus einem lichtundurchlässigen Material anzufertigen.

Die erfindungsgemäße Vorrichtung erlaubt es weiterhin, das photoelektrische Bauelement zunächst auf einer Trägerplatte, z. B. einer gedruckten Schaltung, anzubringen und sodann den Körper mit der Bohrung über dem Bauelement auf der Trägerplatte zu befestigen. Diese Befestigung kann darüber hinaus so ausgeführt werden, daß sie leicht zu lösen ist und der Körper ohne weiteres entfernt bzw. ausgetauscht werden kann.

Da die Breite der einzelnen erfindungsgemäßen Vorrichtung durch den Lichtwellenleiter und die Feder bestimmt ist und dadurch sehr klein gehalten werden kann, ist es in Weiterbildung der Erfindung möglich, mehrere Vorrichtungen nebeneinander und voneinander trennbar anzuordnen, wie dies z. B. bei Lüsterklemmen bekannt ist. Dies ermöglicht eine serienmäßige Herstellung der Vorrichtung und erleichtert zudem das Anbringen auf die Trägerplatte, falls auf einer Trägerplatte mehrere erfindungsgemäße Vorrichtungen benötigt werden.

Die Figuren zeigen in zum Teil schematischer Darstellung Ausführungsbeispiele einer Vorrichtung nach der Lehre der Erfindung.

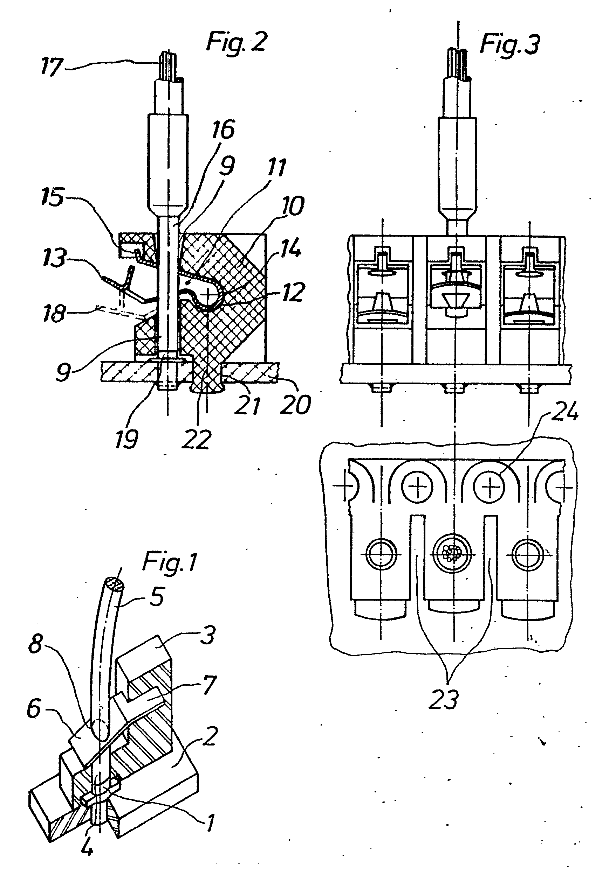

In Fig. 1 ist mit 1 ein photoelektrisches Bauelement bezeichnet, das auf einer Trägerplatte 2 befestigt ist. Der in der erfindungsgemäßen Vorrichtung enthaltende Körper ist mit 3 bezeichnet und weist eine Bohrung 4 auf, die so bemessen ist, daß sie den Gesamtquerschnitt des Lichtwellenleiters 5 schlüssig umhüllt. Der Lichtwellenleiter 5 sitzt unmittelbar auf dem Bauelement 1 auf. Die Blattfeder 6 ist bei 7 in den Körper 3 festgelegt, und ihr freies Ende liegt über der Bohrung 4. Die Blattfeder 6 ist mit einer Perforation 8 versehen. Diese Perforation 8 ist so angeordnet und dimensioniert, daß sie im nach oben ausgelenkten Zustand der Blattfeder 6 in der Projektion auf die Öffnung der Bohrung 4 diese freiläßt. Der Lichtwellenleiter 5 wird im ausgelenkten Zustand der Blattfeder 6 durch die Perforation 8 hindurch in die Bohrung 4 eingeführt bis er auf dem Bauelement 1 aufsitzt. Wird die Blattfeder 6 nun losgelassen, so bewegt sie sich nach unten und greift dabei mit Teilen des Umfangs der Perforation an den Lichtwellenleiter 5 an und drückt diesen nach unten. Dadurch wird eine vollständige Entspannung der Blattfeder vermieden.

In der Ausführungsform nach Fig. 2 ist die Bohrung 9 in dem Körper 10 von einer Ausnehmung 11 durchsetzt. Die Ausnehmung 11 weist einen Teil 12 auf, die Blattfeder 13 ist im wesentlichen V-förmig ausgebildet, weist jedoch Ausformungen 14 und 15 auf, die von der V-Form abweichen und mit denen sie in die Ausnehmung 11 eingesprengt ist. Die Einführung und Festlegung des hier mit einer Hülse 16 umgebenen Lichtwellenleiters 17 ist im wesentlichen die gleiche wie bei der Ausführungsform nach Fig. 1. Im Lauf der Entspannung bewegt sich die Blattfeder 13 in Richtung auf die gestrichelt gekennzeichnete Lage 18 und legt damit den Lichtwellenleiter 17 auf dem Bauelement 19 fest. Das Bauelement 19 ist auch hier auf einer gedruckten Schaltung 20 befestigt. Zur Befestigung des Körpers 10 auf die gedruckte Schaltung 20 weist letztere ein Loch 21 auf, durch das bei der Erstmontage ein Ansatz 22 des Körpers 10, der z. B. aus Polyamid besteht, hindurchgeführt wird, und durch Verformen des Ansatzes 22 erfolgt die Festlegung des Körpers 10 auf der gedruckten Schaltung 20. Wahlweise kann der Körper 10 auf der gedruckten Schaltung auch durch eine Schraube festgelegt werden, die z. B. durch eine Bohrung 24 geführt worden ist.

Fig. 3 zeigt in Ansicht und Draufsicht drei nebeneinander angeordnete erfindungsgemäße Vorrichtungen, die, wie insbesondere aus dem unteren Teil der Fig. 3 ersichtlich, nach Art von Lüsterklemmen bei 23 durch Kerbungen gegeneinander abgesetzt sind und mit Hilfe dieser Kerbungen leicht voneinander getrennt werden können, sofern dieses erforderlich ist.

## Patentansprüche

1. Vorrichtung zum Andrücken der Stirnfläche eines Lichtwellenleiters mit oder ohne eine das Endstück des Lichtwellenleiters schützende Hülse an die lichtaufnehmende oder -abgebende Fläche eines photoelektrischen Bauelements, gekennzeichnet durch einen Körper (3, 10) mit einer Bohrung (4, 9), die an ihrem einen Ende das Bauelement (1, 19) und im übrigen den Lichtwellenleiter aufnimmt, wobei sie mindestens in der Nähe des Bauelementes (1, 19) den Gesamtquerschnitt des Lichtwellenleiters (5, 17) schlüssig umhüllt, und mit einer mit dem Körper (3, 10) verbundenen Blattfeder (6, 13), deren freies Ende mit Abstand vor der dem Bauelement (1, 19) abgewandten Öffnung der Bohrung (4, 9) angeordnet und in Richtung weg vom Bauelement (1, 19) auslenkbar ist und die mit einer Perforation (8) versehen ist, deren Querschnitt in der Projektion auf die Öffnung der Bohrung (4, 9) im ausgelenkten Zustand deren Querschnitt entspricht, sich jedoch in der Entspannungsbewegung gegenüber diesem verengt.

2. Vorrichtung nach Anspruch 1, dadurch gekennzeichnet, daß der Körper (10) mit einer die Bohrung (9) in einem Abstand von dem Bauelement (19) durchsetzenden Ausnehmung (11) versehen ist, in die das freie Ende der Blattfeder (13) hineinragt, und daß die Blattfeder (13) im entspannten Zustand im wesentlichen V-förmig ist und mit ihrem einen Schenkel an der dem Bauelement (19) abgewandten Ausnehmungswand anliegt, wobei dieser Schenkel den Querschnitt der Bohrung (9) freiläßt.

3. Vorrichtung nach Anspruch 2, dadurch gekennzeichnet, daß die Blattfeder (13) mit von der V-Form abweichenden Abschnitten (14, 15) versehen ist, die in Kehlen (12) in der Ausnehmungswand eingreifen.

4. Vorrichtung nach Anspruch 1, dadurch gekennzeichnet, daß der Körper (3, 10) aus einem lichtundurchlässigen Material besteht.

5. Vorrichtung nach einem der Ansprüche 1 bis 4, dadurch gekennzeichnet, daß das Bauelement (1, 19) auf einer Trägerplatte (2, 20) angebracht ist, auf der der Körper (3, 10) mit der Bohrung (4, 9) über dem Bauelement (1, 19) befestigt ist.

6. Vorrichtung nach einem der Ansprüche 1 bis

5, dadurch gekennzeichnet, daß mehrere Vorrichtungen nebeneinander und voneinander nach Art von Lüsterklemmen trennbar angeordnet sind.

## Claims

1. Device for pressing the end surface of an optical waveguide, with or without a sleeve which protects the end piece of the optical waveguide, against the light-receiving or light-emitting surface of a photoelectrical element, characterised by a body (3, 10), with a bore (4, 9) which receives, at one of its ends, the element (1, 19) and which receives, in the other end, the optical waveguide, this bore positively surrounding, at least in the vicinity of the element (1, 19), the entire cross-section of the optical waveguide (5, 17), and with a leaf spring (6, 13), which is connected to the body (3, 10), the free end of this spring being located in front of that opening of the bore (4, 9) which faces away from the element (1, 19), and at a distance in front of that opening, and being capable of being deflected in the direction away from the element (1, 19), and which spring is provided with a perforation (8), the cross-section of which, in the projection on to the opening of the bore (4, 9), corresponds, in the deflected state, to the bore cross-section, but which nevertheless becomes more constricted, relative to the bore cross-section, in the course of the relaxing movement.

2. Device according to Claim 1, characterised in that the body (10) is provided with a recess (11), which passes through the bore (9) at a distance from the element (19), the free end of the leaf spring (13) projecting into this recess, and in that the leaf spring (13) in the relaxed state, is essentially V-shaped, and rests, via one of its limbs, against that wall of the recess which faces away from the element (19), this limb leaving the cross-section of the bore (9) open.

3. Device according to Claim 2, characterised in that the leaf spring (13) is provided with portions (14, 15) which deviate from the V-shape, and engage into grooves (12) in the wall of the recess.

4. Device according to Claim 1, characterised in that the body (3, 10) is composed of an opaque material.

5. Device according to one of Claims 1 to 4, characterised in that the element (1, 19) is mounted on a supporting plate (2, 20), on which the body (3, 10) is secured, with the bore (4, 9) over the element (1, 19).

6. Device according to one of Claims 1 to 5, characterised in that a plurality of devices are arranged one beside another, and in a manner whereby they can be separated, one from another, in the manner of insulating screw-terminals.

## Revendications

1. Dispositif pour l'application par pression de la surface frontale d'un conducteur optique, avec ou sans une gaine protectrice de la portion d'extrémité du conducteur, sur la surface réceptrice ou émettrice de lumière d'un élément de construction photoélectrique, dispositif caractérisé par un corps (3, 10) pourvu d'un alésage (4, 9) qui reçoit, à l'une de ses extrémités, l'élément de construction (1, 19) et, avec la partie restante, le conducteur optique (5, 17), de telle sorte que, au moins au voisinage de l'élément de construction (1, 19), il entoure, par sa forme, la totalité de la section transversale du conducteur optique (5, 17) avec, relié au corps (3, 10), un ressort à lame (6, 13), dont l'extrémité libre se trouve espacée de l'ouverture de l'alésage (4, 9) éloignée de l'élément de construction (1, 19) et peut être déviée dans la direction opposée à l'élément, et qui est pourvue d'un perçage (8), dont la section transversale, en projection sur l'ouverture de l'alésage (4, 9), à l'état dévié vers l'extérieur, laisse libre cette ouverture, mais en réduit la section transversale, dans son déplacement de détente du ressort.

2. Dispositif suivant la revendication 1, caractérisé en ce que le corps (10) est pourvu d'un alésage (9) dans un évidement traversant à distance de l'élément de construction (19), dans lequel s'avance l'extrémité libre du ressort à lame (13), ce ressort (13) ayant, à l'état détendu, une forme de V, appliquée, par une branche, contre la paroi de l'évidement éloignée de l'élément de construction (19), cette branche laissant alors libre la section transversale de l'alésage (9).

3. Dispositif suivant la revendication 2, caractérisé en ce que le ressort à lame (13) est pourvu d'évidements (14, 15) de formes différentes de celle d'un V et est engagé élastiquement dans des parties (12) de forme correspondante de la paroi de l'évidement.

4. Dispositif suivant la revendication 1, caractérisé en ce que le corps (3, 10) est constitué en un matériau translucide.

5. Dispositif suivant l'une quelconque des revendications 1 à 4, caractérisé en ce que l'élément de construction (1, 9) est monté sur une plaque de support (2, 20) sur laquelle est fixé le corps (3, 10), avec son alésage (4, 9) au-dessus de l'élément de construction (1, 19).

6. Dispositif suivant l'une quelconque des revendications 1 à 5, caractérisé en ce que plusieurs dispositifs sont placés l'un près de l'autre et peuvent être séparés à la manière de bornes de branchement de lustre.

Fig. 2

Fig. 3

Fig. 1